(19) Europäisches Patentamt
European Patent Office
Office européen des brevets

(11) **EP 4 455 352 A1**

(12) **EUROPEAN PATENT APPLICATION**
published in accordance with Art. 153(4) EPC

(43) Date of publication:
**30.10.2024  Bulletin 2024/44**

(21) Application number: **22911665.2**

(22) Date of filing: **30.11.2022**

(51) International Patent Classification (IPC):
*C22C 38/58* (2006.01)          *C22C 38/44* (2006.01)
*C22C 38/48* (2006.01)          *C22C 38/50* (2006.01)
*C22C 38/00* (2006.01)          *C21D 8/02* (2006.01)
*C21D 9/46* (2006.01)

(52) Cooperative Patent Classification (CPC):
**C21D 8/02; C21D 9/46; C22C 38/00; C22C 38/44;
C22C 38/48; C22C 38/50; C22C 38/58;** Y02P 10/20

(86) International application number:
**PCT/KR2022/019145**

(87) International publication number:
**WO 2023/121032 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021  KR 20210183516**

(71) Applicant: POSCO Co., Ltd
**Pohang-si, Gyeongsangbuk-do 37859 (KR)**

(72) Inventors:
• KIM, Woo-Gyeom
  **Pohang-si, Gyeongsangbuk-do 37877 (KR)**
• KIM, Sang-Ho
  **Pohang-si, Gyeongsangbuk-do 37877 (KR)**
• BYUN, Young-Sub
  **Pohang-si, Gyeongsangbuk-do 37877 (KR)**

(74) Representative: **Meissner Bolte Partnerschaft
mbB
Patentanwälte Rechtsanwälte
Postfach 86 06 24
81633 München (DE)**

(54) **STEEL PLATE HAVING HIGH STRENGTH AND EXCELLENT IMPACT TOUGHNESS AFTER DEFORMATION, AND METHOD FOR MANUFACTURING SAME**

(57)    The present invention pertains to a steel plate and a method for manufacturing same. More specifically, the present invention pertains to a steel plate having high strength and excellent impact toughness after deformation, and a method for manufacturing same.

FIG. 1

(a)

(b)

**Description**

Technical Field

The present disclosure relates to a thick steel plate and a method for manufacturing the same, and more specifically, to a thick steel plate having high strength and excellent impact toughness after deformation, and a method for manufacturing the same.

Background Art

Since the 2000s, interest has been focused on environmental issues and renewable energy to reduce greenhouse gas emissions. Renewable energy is a term which refers to a combination of new energy (hydrogen, fuel cells, and the like) and renewable energy (solar heat, wind power, bio, and the like), and thereamong, wind power generation is attracting attention as a next-generation energy source, as an eco-friendly power generation method that does not generate waste and does not cause pollution.Among types of wind power generation, onshore wind power installed on land is limited in mission and a space for optimal wind formation, so recently, offshore wind power, installed in the sea, has been growing rapidly, especially in Europe.

Although offshore wind power was activated later than onshore wind power, the relative advantage of offshore wind power over onshore wind power is increasingly highlighted as the level of technology has advanced due to various advantages such as low concerns about wind speed, noise generation, and the ability to secure a large catchment area. In particular, offshore wind power has the great advantage of being able to increase power generation capacity per wind turbine compared to onshore wind power. In other words, average power generation capacity is about twice that of onshore wind power, and average capacity of new turbine installations per unit based on European standards is rapidly increasing from 4MW in 2015 to 7.2MW in 2019, and is expected to exceed 10MW within 2-3 years.

Accordingly, the strength of the applied thick steel plate gradually increased, and most thick steel plates had a yield strength of 325 MPa based on a thickness of 80 mm, but in the 20s, thick steel plates having yield strengths of 380 and 410 MPa were being applied. A substructure of the offshore wind power is largely divided into monopile and jacket, and the jacket-type substructure is divided into a pinpile-type or a suction bucket-type depending on a method of fixation to the seafloor.

In the case of the monopile substructure, it is divided into a monopile portion inserted into the seafloor, and a transition piece portion connecting the monopile and a tower portion. In this structure, a load increases the most, and high-strength steel can be mainly applied to a connection portion of the monopile and the transition piece, which is a joint portion. The important support area of this offshore wind power substructure is formed of a thick steel plate which not only has high strength but can also guarantee extremely thick and low-temperature toughness, and during pipe construction with a cylindrical piping structure, it is important to secure impact toughness after deformation.

Summary of Invention

Technical Problem

An aspect of the present disclosure is to provide a thick steel plate having high strength and excellent impact toughness after deformation, and a method for manufacturing the same.

The subject of the present invention is not limited to the above. The subject of the present invention will be understood from the overall content of the present specification, and those of ordinary skill in the art to which the present invention pertains will have no difficulty in understanding the additional subject of the present invention.

Solution to Problem

According to an aspect of the present disclosure, a steel plate may be provided, the steel plate including by weight%: 0.04 to 0.08% of C, 0.1 to 0.35% of Si, 1.4 to 1.8% of Mn, 0.01 to 0.035% of sol.Al, 0.2 to 0.5% of Ni, 0.1 to 0.3% of Cr, 0.05 to 0.15% of Mo, 0.015 to 0.035% of Nb, 0.005 to 0.02% of Ti, 0.002 to 0.006% of N, 0.01% or less of P, 0.003% or less of S, with a balance of iron (Fe) and other inevitable impurities,

wherein an R value defined in Relational expression 1 below is 0.85 to 1.35,
a microstructure at a point equal to 1/4 of a thickness thereof includes by area fraction, 40 to 60% of acicular ferrite, 40 to 60% of bainite, and 3% or less of a sum of residual cementite and MA,
an average grain size of acicular ferrite at the point equal to 1/4 of the thickness is 20 um or less, and
a microstructure in a portion 8mm directly below a surface portion includes by area, 5% or less of a hard phase.

[Relational expression 1]

$$R = [Ni] + 3[Mo] + 2[Cr]$$

where [Ni], [Mo] and [Cr] are a weight percent of each element.

The hard phase may be an MA phase.

The steel plate may have an average grain size of acicular ferrite at the point equal to 1/4 of the thickness of 10 to 20 $\mu$m.

The steel plate may have a thickness of 50 to 100 mm.

The steel plate may have a yield strength of 460 MPa or more and a tensile strength of 580 MPa or more.

The steel plate may have an impact toughness of 100J or more at -50°C on the surface and at the point equal to 1/4 of the thickness of the steel plate after deformation, where deformation means that when an amount of deformation reaches 5%, during tensioning, tensioning is stopped and then an aging treatment is performed at 250°C.

According to another aspect of the present disclosure, a method for manufacturing a steel plate may be provided, the method including: reheating a steel slab comprising by weight%: 0.04 to 0.08% of C, 0.1 to 0.35% of Si, 1.4 to 1.8% of Mn, 0.01 to 0.035% of sol.Al, 0.2 to 0.5% of Ni, 0.1 to 0.3% of Cr, 0.05 to 0.15% of Mo, 0.015 to 0.035% of Nb, 0.005 to 0.02% of Ti, 0.002 to 0.006% of N, 0.01% or less of P, 0.003% or less of S, with a balance of iron (Fe) and other inevitable impurities, wherein an R value defined in the following Relational expression 1 is 0.85 to 1.35;

rolling the reheated steel slab in a recrystallization zone at a temperature range of 900°C or higher with an amount of reduction of final pass of 15 to 25 mm;

rolling the steel plate rolled in the recrystallization zone in a non-recrystallization zone at a rolling finish temperature of Ar3+40 to Ar3+80; and

cooling the steel plate rolled in the non-recrystallization zone to a temperature range of 400°C or lower at a cooling rate of 5 to 10°C/s based on the point equal to 1/4 of the thickness.

[Relational expression 1]

$$R = [Ni] + 3[Mo] + 2[Cr]$$

where [Ni], [Mo], and [Cr] are a weight percent of each element.

The reheating may be performed at a temperature range of 1020 to 1100°C, and when rolling is performed in the non-recrystallization zone, a cumulative reduction ratio may be 30 to 50%.

The steel plate may have a thickness of 50 to 100 mm.

Advantageous Effects of Invention

As set forth above, according to an aspect of the present disclosure, a thick steel plate having high strength and excellent impact toughness after deformation and a method for manufacturing the same may be provided.

According to an aspect of the present disclosure, a thick steel plate that has excellent strength and low-temperature impact toughness and may be applied as an extremely thick steel material for offshore wind power, and may also be used as a structural steel material for infrastructure industries such as construction and bridges, and a manufacturing method therefor may be provided.

Brief description of drawings

FIG. 1 is a photograph of the microstructure of Inventive Example according to an aspect of the present disclosure observed at 500x magnification using an optical microscope. FIG. (a) in FIG. 1 is a photograph of a microstructure at a point 8 mm below the surface, and FIG. (b) in FIG. 1 is a photograph of a microstructure at a point equal to 1/4 of the thickness.

FIG. 2 is a photograph of a microstructure of Comparative Example 4 according to an aspect of the present disclosure observed at 500x magnification using an optical microscope.

Best Mode for Invention

Hereinafter, preferred embodiments of the present disclosure will be described. Embodiments of the present disclosure may be modified in various forms, and the scope of the present disclosure should not be construed as being limited to the embodiments described below. The present embodiments are provided to those skilled in the art to further elaborate the present disclosure.

Hereinafter, the present disclosure is described in detail.

Hereinafter, the steel composition of the present disclosure will be described in detail.

In the present disclosure, unless otherwise specified, % indicating a content of each element is based on weight.

Steel according to an aspect of the present disclosure may comprise, by weight%: 0.04 to 0.08% of C, 0.1 to 0.35% of Si, 1.4 to 1.8% of Mn, 0.01 to 0.035% of sol.Al, 0.2 to 0.5% of Ni, 0.1 to 0.3% of Cr, 0.05 to 0.15% of Mo, 0.015 to 0.035% of Nb, 0.005 to 0.02% of Ti, 0.002 to 0.006% of N, 0.01% or less of P, 0.003% or less of S, with a balance of iron (Fe) and other inevitable impurities.

Carbon (C): 0.04 to 0.08%

Carbon (C) is an element which causes solid solution strengthening and exists as a carbonitride due to Nb, or the like to secure tensile strength, and a content of carbon (C) may be limited to 0.04% or more. On the other hand, when the carbon (C) content exceeds 0.08%, it not only promotes formation of MA, but also generates pearlite, which can deteriorate impact characteristics at low temperatures, and there may be a risk of deteriorating welding characteristics when welding a structure. A more preferable upper limit of the carbon (C) content may be 0.07%.

Silicon (Si): 0.1 to 0.35%

Silicon (Si) is an element which assists Al in deoxidizing molten steel and is necessary to secure yield strength and tensile strength, and a content of silicon (Si) may be 0.1% or more. However, if the Si content exceeds 0.35%, there may be a problem of inhibiting diffusion of C and encouraging the formation of MA. More preferably, 0.15% or more of silicon (Si) may be included, and even more preferably, 0.25% or less of silicon (Si) may be included.

Manganese (Mn): 1.4 to 1.8%

Since manganese (Mn) has a significant effect of increasing strength through solid solution strengthening, 1.4% or more of manganese (Mn) is preferably added. On the other, when a content of manganese (Mn) is excessive, it may cause a decrease in toughness due to formation of MnS inclusions and central segregation, so an upper limit of the Mn content may be limited to 1.8%. A more preferably lower limit of the Mn content may be 1.5%.

Aluminum (sol.Al): 0.01 to 0.035%

Aluminum (sol.Al) is a major deoxidizing agent in steel, and it is preferable to add 0.01% or more of aluminum (sol.Al) to obtain the effect. However, a content of aluminum (sol.Al) exceeds 0.035%, it may cause a decrease in low-temperature toughness due to an increase in a fraction and size of $Al_2O_3$ inclusions. In addition, similar to Si, there may be a risk of deteriorating low-temperature toughness characteristics by promoting the creation of a base material and MA in a weld heat-affected zone. More preferably, 0.015% or more of aluminum (sol.Al) may be included, and even more preferably, 0.03% or less of aluminum (sol.Al) may be included.

Nickel (Ni): 0.2 to 0.5%

Nickel (Ni) is an element which improves strength without deteriorating impact toughness, and may increase strength by promoting the formation of an appropriate amount of acicular ferrite, so it is preferable that 0.2% or more of nickel (Ni) is added. On the other hand, when a content of nickel (Ni) exceeds 0.5%, an Ar3 temperature may drop to form bainite, and accordingly, there may be a risk that impact toughness in an extremely thick material may decrease. A more preferable lower limit of the nickel (Ni) content may be 0.3%.

Chromium (Cr): 0.1 to 0.3%

Chromium (Cr) is a carbide-forming element, which is advantageous for securing strength, but in an extremely thick steel material, since coarse carbides may be formed depending on a cooling rate of steel, which may impede impact toughness, a content of chromium (Cr) may be limited to 0.1 to 0.3%. A more preferable lower limit of the Cr content may be 0.15%.

Molybdenum (Mo): 0.05 to 0.15%

Molybdenum (Mo) is an element which effectively increases strength with an addition of a small amount of Mo, and since Mo forms Mo-C-based precipitates to improve the strength, it is preferable that 0.05% or more of Mo is added. However, since coarsening of precipitates may occur due to excessive addition of molybdenum (Mo), an upper limit of the Mo content may be limited to 0.15%. A more preferable lower limit of the Mo content may be 0.08%, and a more preferable upper limit of the Mo content may be 0.12%.

Niobium (Nb): 0.015 to 0.035%

Niobium (Nb) is an element which suppresses recrystallization during rolling or cooling by forming a solid solution or precipitating carbonitrides, to make the structure finer and increase strength. Nb may be added in an amount of 0.015% or more. However, C concentration occurs due to C affinity and promotes MA production, which can reduce toughness and fracture characteristics at low temperatures, so an upper limit of the Nb content may be limited to 0.035%. A more preferable lower limit of the Nb content may be 0.02%, and a more preferable upper limit of the Nb content may be 0.03%.

Titanium (Ti): 0.005 to 0.02%

Titanium (Ti) may combine with oxygen or nitrogen to form precipitates. The precipitates contribute to refinement by suppressing coarsening of the structure, and play a role in improving toughness, so it is preferable that Ti is added in an amount of 0.001% or more. However, if a content of Ti exceeds 0.02%, there is a risk that it may cause destruction due to coarsening of the precipitates. A more preferable lower limit of the Ti content may be 0.01%, and a more preferable upper limit of the Ti content may be 0.018%.

Nitrogen (N): 0.002 to 0.006%

Nitrogen (N) forms precipitates with Ti, Nb, Al, and the like, and when reheated, N may help improve strength and toughness by refining an austenite structure. However, when N is contained excessively, it may cause surface cracks and form precipitates at high temperatures, and the remaining nitrogen (N) exists in an atomic state and may reduce toughness, so a content of nitrogen (N) should be limited to 0.002 to 0.006%.

Phosphorus (P): 0.01% or less

Phosphorus (P) is an element causing grain boundary segregation and can cause embrittlement, so an upper limit of a content of phosphorous (P) may be limited to 0.01%. However, 0% may be excluded considering an avoidably added level.

Sulfur (S): 0.003% or less

Sulfur (S) may mainly combine with Mn to form MnS inclusions, which can be a factor impairing low-impact toughness. Therefore, in order to secure low-temperature toughness and low-temperature fatigue properties, an upper limit of a content of S may be limited to 0.003%. However, 0% may be excluded considering an avoidably added level.

The steel of the present disclosure may include remaining iron (Fe) and unavoidable impurities in addition to the above-described composition. Since unavoidable impurities may be unintentionally incorporated in a common manufacturing process, the component may not be excluded. Since these impurities are known to any person skilled in the common manufacturing process, the entire contents thereof are not particularly mentioned in the present specification.

In particular, copper (Cu) may be added as an impurity, but in the present disclosure, a content of copper (Cu) may be limited to less than 0.05%.

The steel according to an aspect of the present disclosure may have an R value of 0.85 to 1.35, defined in Relational expression 1 below.

In the present invention, Relational expression 1 is proposed to secure strength and low-temperature toughness at -50 °C at the same time. Relational expression 1 relates to a component formula for securing strength and toughness, and the strength and low-temperature toughness may be secured by controlling an R value of Relational expression 1. When the R value of Relational expression 1 is less than 0.85, there is a problem in that the desired yield strength may not be secured due to insufficient solid solution strengthening, precipitation strengthening, hardenability, and the like, and when the R value of Relational expression 1 exceeds 1.35, hard structures such as MA, bainite, and the like may be formed, resulting in inferior impact toughness.

$$[Relational\ expression\ 1]$$

$$R\ =\ [Ni]+3[Mo]+2[Cr]$$

where [Ni], [Mo], and [Cr] are a weight percent of each element.

Hereinafter, a microstructure of steel of the present disclosure will be described in detail.

In the present disclosure, unless specifically stated otherwise, % indicating a fraction of microstructure is based on area.

The steel according to an aspect of the present disclosure may comprise by area fraction: 40 to 60% of acicular ferrite, 40 to 60% of bainite, and 3% or less of a sum of residual cementite and MA as a microstructure at a point equal to 1/4 of a thickness thereof.

In the present disclosure, in order to implement impact toughness at -50°C at the point equal to 1/4 of the thickness, a size, dislocation density, and the like of acicular ferrite are important, and it is preferable to minimize cementite and MA. More preferably, 2% or less of a sum of cementite and MA may be included. In the present disclosure, a point equal to 1/4 of the thickness thereof is t/4, where t is a thickness of the steel plate.

The steel according to an aspect of the present disclosure may have an average grain size of acicular ferrite at a point equal to 1/4 of the thickness of 20 um or less.

In the present disclosure, the average grain size of acicular ferrite may be limited to 20 um or less to ensure low-temperature impact toughness. If the size exceeds 20um, there may be a problem of reduced impact toughness. Meanwhile, due to the characteristics of a thick steel plate with a thickness of 50 mm or more, targeted in the present disclosure, there is a limitation in refinement of the grains, so a lower limit of the size may be limited to 10 $\mu$m.

The steel according to an aspect of the present disclosure may include by area fraction, 5% or less of a hard phase as a microstructure in a portion 8mm directly below a surface portion.

In the present disclosure, in order to secure the desired impact toughness after deformation, a fraction of the hard phase in the microstructure directly below the surface portion may be limited to 5% or less. When the fraction of the hard phase exceeds 5%, there is a problem that it acts as a starting point for impact toughness fracture, and impact toughness may be inferior. In the present disclosure, the hard phase may be an MA phase, which is a combination of martensite and austenite.

Hereinafter, a method for manufacturing steel of the present disclosure will be described in detail.

The steel according to an aspect of the present disclosure may be manufactured by reheating, rolling, and cooling a steel slab satisfying the above-described alloy composition.

Reheating

A steel slab satisfying the alloy composition of the present disclosure may be reheated to a temperature within a range of 1020 to 1100°C.

If a reheating temperature is higher than 1100°C, austenite grains may become coarse, which may reduce toughness due to the development of bainite structure due to increased hardenability. On the other hand, if the reheating temperature is lower than 1020°C, Ti, Nb, and the like may not be sufficiently dissolved, which may result in a decrease in strength.

Rolling in a recrystallization zone

The reheated steel slab may be rolled in a recrystallization zone with an amount of reduction of final pass of 15 to 25 mm in a temperature range of 900°C or higher.

In the present disclosure, the operation of rolling in a recrystallization zone is performed for completely recrystallizing austenite, and suppressing the refinement and growth of austenite. Rolling in a recrystallization zone is preferably performed in a temperature range of 900°C or higher for complete austenite recrystallization, and an amount of reduction of final pass may be 15 to 25 mm for initial austenite refinement. If the amount of reduction of final pass is less than 15 mm, it may be difficult to secure the desired level of refinement. Meanwhile, during rolling, the upper limit may be limited to 25 mm in consideration of productivity according to equipment specifications.

Rolling in a non-recrystallization zone

The steel plate rolled in the recrystallization zone may be rolled in a non-recrystallization zone at a rolling end temperature of Ar3+40 to Ar3+80 and a cumulative reduction ratio of 30 to 50%.

In the present disclosure, the rolling finish temperature may be sufficiently increased to prevent a temperature in a surface portion after rolling and before cooling begins. If the rolling finish temperature is lower than Ar3+40, the temperature in the surface portion before cooling falls below the Ar3 temperature, in a two-phase region, grain boundary concentration of C may occur, due to cooling, it may be transformed into a phase with high hardness, which can have a very negative effect on impact toughness after deformation. On the other hand, if the temperature is higher than Ar3+80, it becomes difficult to achieve grain refinement at the point equal to 1/4 of the thickness, and there is a risk that impact toughness at - 50°C may decrease.

In addition, it is preferable that a thick material with a thickness of 50 mm or more has a cumulative reduction ratio is 30 to 50%. If the cumulative reduction ratio is less than 30%, an amount of rolling in the non-recrystallization zone is reduced, causing problems such as pancaking of the structure and difficulty in refining, and if the cumulative reduction ratio exceeds 50%, there is a risk that the low-temperature impact toughness may be deteriorated due to the insufficient amount of rolling in the recrystallization zone.

$$[\text{Equation}]$$

$$\text{Ar3} = 910-310[C]-80[Mn]-20[Cu]-15[Cr]-55[Ni]-80[Mo]$$

where [C], [Mn], [Cu], [Cr], [Ni], and [Mo] are a weight percent of each element.

Cooling

The steel plate rolled in the non-recrystallization zone may be cooled to a temperature range of 400°C or lower at a cooling rate of 5 to 10°C /s based on a point equal to 1/4 of a thickness thereof.

It is preferable for the thick steel plate targeted in the present disclosure to secure impact toughness around 1/4 of the thickness. Therefore, a cooling rate limited in the present disclosure may be based on the point equal to 1/4 of the thickness. If the cooling end temperature is higher than 400°C or the cooling rate exceeds 10°C/s, the formation of MA may be promoted and impact toughness may be inferior. On the other hand, if the cooling rate is less than 5°C/s, it may be difficult to secure the desired level of strength. In the present disclosure, water cooling can be used as a cooling method.

The steel of the present disclosure manufacture in this manner may have thickness of 50 to 100 mm, a yield strength of 460 MPa or more, a tensile strength of 580 MPa or more, and an impact toughness of 100J or more at -50°C on the surface and at a point equal to 1/4 of the thickness after deformation, and have high strength and excellent impact toughness properties after deformation.

Hereinafter, the present disclosure will be described in more detail through examples. It should be noted that the following examples are only for understanding of the present invention, and are not intended to specify the scope of the present invention. The scope of the present invention may be determined by the matters described in the claims and the matters reasonably inferred therefrom.

Mode for Invention

(Example)

After preparing molten steel having the alloy composition shown in Table 1 below, a slab was manufactured using continuous casting. The slab was reheated, rolled, and cooled under the conditions shown in Table 2 below to manufacture a steel plate. A rolling temperature in a recrystallization zone, not disclosed in Table 2 was applied equally at a temperature of 900°C or higher, and when rolling was performed in a non-recrystallization zone, a cumulative reduction ratio was applied equally within a range of 30 to 50%. In addition, Table 1 showed the calculated Ar3 temperature and R value of Relational expression 1 according to the alloy composition of each steel type.

[Table 1]

| STEEL TYPE | ALLOY COMPOSITION (wt%) | | | | | | | | | | | | Ar3 (°C) | RELATIONAL EXPRESSION 11 |
|---|---|---|---|---|---|---|---|---|---|---|---|---|---|---|
| | C | Si | Mn | P | S | Al | Ni | Cr | Mo | Ti | Nb | N | | |
| A | 0.0 54 | 0.1 5 | 1.6 3 | 0.00 73 | 0.00 17 | 0.0 22 | 0.3 4 | 0.2 2 | 0.1 1 | 0.0 12 | 0.0 23 | 0.00 35 | 732 | 1.1 1 |
| B | 0.0 62 | 0.1 4 | 1.5 7 | 0.00 80 | 0.00 15 | 0.0 25 | 0.3 8 | 0.2 0 | 0.0 8 | 0.0 12 | 0.0 24 | 0.00 42 | 735 | 1.0 2 |
| C | 0.0 64 | 0.1 8 | 1.5 4 | 0.00 67 | 0.00 17 | 0.0 25 | 0.4 2 | 0.1 8 | 0.1 1 | 0.0 13 | 0.0 22 | 0.00 40 | 732 | 1.1 1 |
| D | 0.0 60 | 0.1 4 | 1.6 2 | 0.00 81 | 0.00 15 | 0.0 19 | 0.1 1 | 0.0 4 | 0.0 4 | 0.0 13 | 0.0 25 | 0.00 41 | 752 | 0.3 1 |
| E | 0.0 55 | 0.1 8 | 1.5 7 | 0.00 87 | 0.00 17 | 0.0 24 | 0.6 4 | 0.3 7 | 0.1 9 | 0.0 12 | 0.0 26 | 0.00 36 | 711 | 1.9 5 |
| F | 0.0 6 | 0.1 8 | 1.6 3 | 0.00 91 | 0.00 22 | 0.0 25 | 0.4 1 | 0.2 3 | 0.1 | 0.0 12 | 0.0 26 | 0.04 0 | 727 | 1.1 7 |
| G | 0.0 58 | 0.1 5 | 1.5 8 | 0.00 86 | 0.00 15 | 0.0 24 | 0.3 8 | 0.2 0 | 0.0 8 | 0.0 11 | 0.0 21 | 0.00 38 | 735 | 1.0 2 |
| H | 0.0 54 | 0.1 8 | 1.5 5 | 0.00 78 | 0.00 16 | 0.0 29 | 0.4 1 | 0.1 8 | 0.0 9 | 0.0 13 | 0.0 25 | 0.00 36 | 737 | 1.0 4 |
| I | 0.062 | 0.14 | 1.62 | 0.0082 | 0.0020 | 0.023 | 0.40 | 0.23 | 0.11 | 0.012 | 0.024 | 0.0042 | 727 | 1.19 |
| J | 0.0 63 | 0.1 5 | 1.6 3 | 0.09 | 0.01 2 | 0.0 24 | 0.4 1 | 0.1 7 | 0.1 | 0.0 12 | 0.0 23 | 0.03 9 | 727 | 1.0 5 |
| K | 0.0 62 | 0.1 4 | 01.62 | 0.08 3 | 0.01 1 | 0.0 23 | 0.4 9 | 0.2 8 | 0.1 3 | 0.0 11 | 0.0 24 | 0.00 36 | 720 | 1.4 4 |

[Relational expression 1]

R = [Ni]+3[Mo]+2[Cr]

where [Ni], [Mo], and [Cr] are a weight percent of each element.

[Equation]

Ar3 = 910-310[C]-80[Mn]-20[Cu]-15[Cr]-55[Ni]-80[Mo]

where [C], [Mn], [Cu], [Cr], [Ni], and [Mo] are a weight percent of each element.

[Table 2]

| SPECIMEN NO. | STEEL TYPE | REHEATING | ROLLING IN RECRYSTALLIZATION ZONE | | ROLLING IN NON-RECRYSTALLIZATION ZONE | COOLING | |
|---|---|---|---|---|---|---|---|
| | | TEMPERATURE (°C) | AMOUNT OF REDUCTION OF FINAL PASS (%) | FINISH TEMPERATURE (°C) | FINISH TEMPERATURE (°C) | COOLING RATE (°C/s) |
| 1 | A | 1091 | 17.8 | 805 | 384 | 6.7 |
| 2 | B | 1086 | 18.2 | 813 | 365 | 7.5 |
| 3 | C | 1095 | 16.8 | 811 | 355 | 6.3 |
| 4 | D | 1090 | 19.4 | 816 | 386 | 8.1 |
| 5 | E | 1087 | 18.2 | 787 | 342 | 6.7 |
| 6 | F | 1082 | 18.3 | 875 | 385 | 6.8 |
| 7 | G | 1083 | 17.4 | 772 | 364 | 7.6 |
| 8 | H | 1091 | 16.8 | 814 | 394 | 13.8 |
| 9 | I | 1090 | 18.1 | 804 | 572 | 7.4 |
| 10 | J | 1089 | 10.4 | 804 | 322 | 8.1 |
| 11 | K | 1091 | 19.3 | 789 | 354 | 7.8 |

In Table 3 below, a microstructure of the manufactured steel plate was measured and described. A fraction of a hard phase directly below was obtained by observing the microstructure, and a fraction of MA was measured as the hard phase. As the microstructure at a point equal to 1/4 of the thickness, the fractions of acicular ferrite (AF), cementite, and MA were shown, respectively, and the remaining fraction thereof was observed to be bainite. In addition, an acicular ferrite grain size at a point equal to 1/4 of the thickness of the steel was measured and shown. The microstructure was measured using an optical microscope at 500x magnification.

In addition, in Table 3, physical property values for each manufactured specimen were measured and shown. A yield strength (YS), tensile strength (TS), and elongation (El) were evaluated through a tensile test and evaluated according to the EN-ISO 6892-1 standard, and a circular specimen was collected in a direction perpendicular to rolling at a point equal to 1/4 of the thickness, and an average of two tests was measured. In addition, impact toughness values at -50°C were measured. For the impact toughness, a specimen was collected in a direction parallel to rolling at a point equal to 1/4 of the thickness according to the EN ISO 148-1 standard, and an average of three tests was measured. For a deformation impact test, a tensile specimen with a length of 450 mm was produced, and when an amount of deformation during tensioning reached 5%, tensioning was stopped and an aging treatment was performed at 250°C. Thereafter, the impact specimen was measured in the same manner as the base material impact test.

[Table 3]

| SPECIMEN NO. | STEEL TYPE | MICROSTRUCTURE | | | | PHYSICAL PROPERTY | | | | | | DIVISION |
|---|---|---|---|---|---|---|---|---|---|---|---|---|
| | | AT A POINT EQUAL TO 1/4 OF THICKNESS | | | DIRECTLY BELOW SURFACE | | | | IMPACT TOUGHNESS (-50°C, J) | | | |
| | | AF (%) | CEMENTITE AND MA (%) | AF GRAIN SIZE (μm) | HARD PHASE (%) | YIELD STRENGTH (MPa) | TENSILE STRENGTH (MPa) | ELONGATION (%) | BEFORE DEFORMATION AT A POINT EQUAL TO 1/4 OF THICKNESS | AFTER DEFORMATION | | |
| | | | | | | | | | | AT A POINT EQUAL TO 1/4 OF THICKNESS | SURFACE | |
| 1 | A | 54 | 1.2 | 18.5 | 2.4 | 512 | 619 | 25 | 298 | 254 | 278 | INVENTIVE EXAMPLE 1 |
| 2 | B | 52 | 0.9 | 17.3 | 1.2 | 486 | 618 | 24 | 303 | 264 | 245 | INVENTIVE EXAMPLE 2 |
| 3 | C | 49 | 1.1 | 18.2 | 1.1 | 492 | 615 | 23 | 302 | 253 | 187 | INVENTIVE EXAMPLE 3 |
| 4 | D | 68 | 0.8 | 17.8 | 2.5 | 422 | 544 | 28 | 311 | 223 | 195 | COMPARATIVE EXAMPLE 1 |
| 5 | E | 23 | 1.3 | 19.3 | 5.2 | 546 | 662 | 24 | 57 | 23 | 78 | COMPARATIVE EXAMPLE 2 |
| 6 | F | 63 | 1.4 | 26.4 | 2.1 | 523 | 621 | 23 | 36 | 18 | 187 | COMPARATIVE EXAMPLE 3 |
| 7 | G | 33 | 1.5 | 17.0 | 21 | 518 | 619 | 22 | 275 | 213 | 15 | COMPARATIVE EXAMPLE 4 |

| SPECIMEN NO. | STEEL TYPE | MICROSTRUCTURE | | | | PHYSICAL PROPERTY | | | | | | DIVISION |
|---|---|---|---|---|---|---|---|---|---|---|---|---|
| | | AT A POINT EQUAL TO 1/4 OF THICKNESS | | | DIRECTLY BELOW SURFACE | | | | IMPACT TOUGHNESS (-50°C, J) | | | |
| | | AF (%) | CEMENTITE AND MA (%) | AF GRAIN SIZE ($\mu$m) | HARD PHASE (%) | YIELD STRENGTH (MPa) | TENSILE STRENGTH (MPa) | ELONGATION (%) | BEFORE DEFORMATION | AFTER DEFORMATION | | |
| | | | | | | | | | AT A POINT EQUAL TO 1/4 OF THICKNESS | AT A POINT EQUAL TO 1/4 OF THICKNESS | SURFACE | |
| 8 | H | 31 | 1.5 | 18.6 | 12 | 486 | 634 | 24 | 89 | 27 | 35 | COMPARATIVE EXAMPLE 5 |
| 9 | I | 62 | 3.3 | 19.5 | 1.3 | 478 | 635 | 25 | 187 | 36 | 187 | COMPARATIVE EXAMPLE 6 |
| 10 | J | 46 | 1.3 | 25.8 | 1.2 | 442 | 582 | 29 | 45 | 78 | 89 | COMPARATIVE EXAMPLE 7 |
| 11 | K | 35 | 3.5 | 18.3 | 6.2 | 475 | 645 | 27 | 36 | 32 | 45 | COMPARATIVE EXAMPLE 8 |

As shown in Table 3, in Inventive Example satisfying the alloy composition and manufacturing conditions of the present disclosure, the microstructure characteristics proposed in the present disclosure were satisfied and the physical properties desired in the present disclosure were secured.

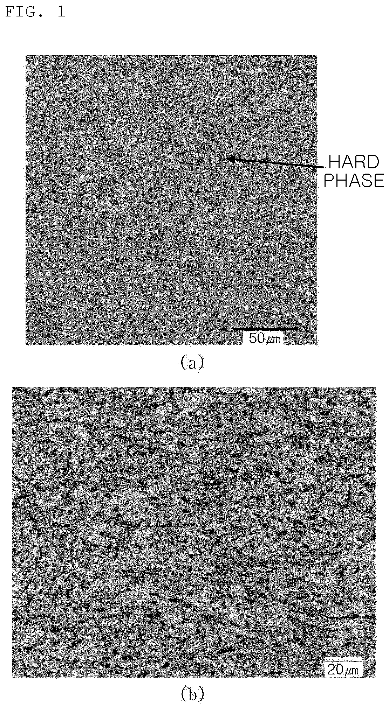

FIG. 1 is a photograph of a microstructure of Inventive Example according to an aspect of the present disclosure observed at 500x magnification using an optical microscope. FIG. 1(a) is a photograph of the microstructure at 8 mm below the surface, and FIG. 1(b) is a photograph of the microstructure at 1/4 the thickness.

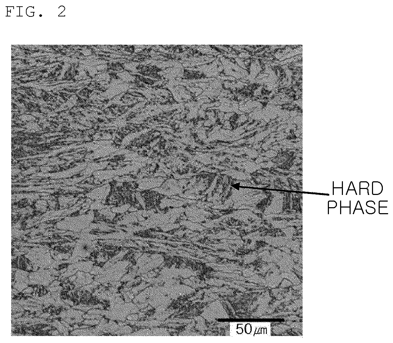

FIG. 2 is a photograph of a microstructure of Comparative Example 4 according to an aspect of the present disclosure observed at 500x magnification using an optical microscope.

On the other hand, Comparative Examples 1 and 2 are examples in which the alloy composition is not satisfied. Comparative Example 1 showed a decrease in strength due to a decrease in hardenability of a base material as a value of Relational expression 1 was insufficient. In Comparative Example 2, the value of Relational expression 1 was exceeded and the formation of MA was promoted, resulting in inferior impact properties after deformation due to an increase in the fraction of MA. In addition, a hard phase was developed due to an increase in surface hardenability, resulting in inferior impact toughness after surface deformation.

Comparative Example 3 showed a case in which a rolling temperature in a non-recrystallization zone was excessive, the impact toughness after impact and deformation at a point equal to 1/4 of the thickness was inferior due to lack of grain refinement.

Comparative Example 4 showed a case in which a rolling temperature in a non-recrystallization zone was therebelow, the impact toughness at a point equal to 1/4 of the thickness due to the grain refinement effect was excellent, but due to entering a local two-phase region before cooling a surface portion, the distribution of the hard phase after cooling has increased significantly. As a result, the impact toughness properties after surface deformation were very poor.

In the case of Comparative Example 5, a cooling rate exceeded the range of the present disclosure and the hard phase increased due to supercooling in the surface portion, resulting in poor impact toughness after surface deformation.

Comparative Example 6 showed a case in which a cooling end temperature was too high, and in Comparative Example 6, the formation of MA at a point equal to 1/4 of the thickness rapidly increased, resulting in poor impact toughness after deformation.

In Comparative Example 7, a final ferrite size could not be refined due to insufficient initial austenite refinement due to an insufficient amount of reduction when rolling is performed in a recrystallization zone, a hard phase was easily formed from coarse austenite, and it could be confirmed that a decrease in yield strength and impact toughness were shown.

Comparative Example 8 showed a case in which the alloy component content proposed in the present disclosure is satisfied, but the value of Relational expression 1 is not satisfied. In Comparative Example 8, it could be confirmed that the operating conditions and temperature ranges proposed therein were satisfied, so the strength was sufficiently satisfied, but due to a decrease in acicular ferrite, an increase in bainite, and an increase in a hard phase in a surface portion, the impact toughness at -50°C and the impact toughness dropped sharply after surface deformation.

While example embodiments have been shown and described above, it will be apparent to those skilled in the art that modifications and variations could be made without departing from the scope of the present disclosure as defined by the appended claims.

**Claims**

1. A steel plate, comprising by weight%:

   0.04 to 0.08% of C, 0.1 to 0.35% of Si, 1.4 to 1.8% of Mn, 0.01 to 0.035% of sol.Al, 0.2 to 0.5% of Ni, 0.1 to 0.3% of Cr, 0.05 to 0.15% of Mo, 0.015 to 0.035% of Nb, 0.005 to 0.02% of Ti, .0.002 to 0.006% of N, 0.01% or less of P, 0.003% or less of S, with a balance of iron (Fe) and other inevitable impurities,
   wherein an R value defined in Relational expression 1 below is 0.85 to 1.35,
   a microstructure at a point equal to 1/4 of a thickness thereof comprises by area fraction, 40 to 60% of acicular ferrite, 40 to 60% of bainite, and 3% or less of a sum of residual cementite and MA,
   an average grain size of acicular ferrite at the point equal to 1/4 of the thickness is 20 um or less, and
   a microstructure in a portion 8mm directly below a surface portion comprises by area fraction, 5% of a hard phase.

   [Relational expression 1]

   $$R = [Ni] + 3[Mo] + 2[Cr]$$

where [Ni], [Mo], and [Cr] are a weight percent of each element.

2.  The steel plate of claim 1, wherein the hard phase is an MA phase.

3.  The steel plate of claim 1, wherein the steel plate has an average grain size of acicular ferrite at the point equal to 1/4 of the thickness of the steel plate of 10 to 20 $\mu$m.

4.  The steel plate of claim 1, wherein the steel plate has a thickness of 50 to 100 mm.

5.  The steel plate of claim 1, wherein the steel plate has a yield strength of 460MPa or more, and a tensile strength of 580MPa or more.

6.  The steel plate of claim 1, wherein the steel plate has an impact toughness of 100J or more at -50°C on the surface and at the point equal to 1/4 of the thickness after deformation, where deformation means that when an amount of deformation reaches 5%, during tensioning, tensioning is stopped and then an aging treatment is performed at 250°C.

7.  A method for manufacturing a steel plate, comprising:

    reheating a steel slab comprising by weight%: 0.04 to 0.08% of C, 0.1 to 0.35% of Si, 1.4 to 1.8% of Mn, 0.01 to 0.035% of sol.Al, 0.2 to 0.5% of Ni, 0.1 to 0.3% of Cr, 0.05 to 0.15% of Mo, 0.015 to 0.035% of Nb, 0.005 to 0.02% of Ti, .0.002 to 0.006% of N, 0.01% or less of P, 0.003% or less of S, with a balance of iron (Fe) and other inevitable impurities, wherein an R value defined in Relational expression 1 below is 0.85 to 1.35;
    rolling the reheated steel slab in a recrystallization zone at a temperature range of 900°C or higher with an amount of reduction of final pass of 15 to 25 mm;
    rolling the steel plate rolled in the recrystallization zone in a non-recrystallization zone at a rolling finish temperature of Ar3+40°C to Ar3+80°C; and
    cooling the steel plate rolled in the non-recrystallization zone to a temperature range of 400°C or lower at a cooling rate of 5 to 10°C/s based on a point of 1/4 of a thickness of the steel plate,

$$[\text{Relational expression 1}]$$

$$R = [Ni]+3[Mo]+2[Cr]$$

    where [Ni], [Mo] and [Cr] are a weight percent of each element.

8.  The method for manufacturing a steel plate of claim 7, wherein the reheating is performed at a temperature range of 1020 to 1100°C, and when rolling is performed in the non-recrystallization zone, a cumulative reduction ratio is 30 to 50%.

9.  The method for manufacturing a steel plate of claim 7, wherein the steel plate has a thickness of 50 to 100 mm.

FIG. 1

HARD
PHASE

(a)

(b)

FIG. 2

HARD
PHASE

50 μm

# EP 4 455 352 A1

<table>
<tr><td colspan="2"><strong>INTERNATIONAL SEARCH REPORT</strong></td><td>International application No.<br><strong>PCT/KR2022/019145</strong></td></tr>
</table>

**A. CLASSIFICATION OF SUBJECT MATTER**

**C22C 38/58**(2006.01)i; **C22C 38/44**(2006.01)i; **C22C 38/48**(2006.01)i; **C22C 38/50**(2006.01)i; **C22C 38/00**(2006.01)i; **C21D 8/02**(2006.01)i; **C21D 9/46**(2006.01)i

According to International Patent Classification (IPC) or to both national classification and IPC

**B. FIELDS SEARCHED**

Minimum documentation searched (classification system followed by classification symbols)

C22C 38/58(2006.01); B21B 1/26(2006.01); C21D 8/02(2006.01); C22C 38/00(2006.01); C22C 38/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 강판(steel sheet), 침상 페라이트(acicular ferrite), 베이나이트(bainite), 강도 (strength), 인성(toughness), 압연(rolling), 냉각(cooling), 니켈(Ni), 크롬(Cr), 몰리브덴(Mo)

**C. DOCUMENTS CONSIDERED TO BE RELEVANT**

| Category* | Citation of document, with indication, where appropriate, of the relevant passages | Relevant to claim No. |
|---|---|---|
| X | JP 2012-172258 A (NIPPON STEEL CORP.) 10 September 2012 (2012-09-10)<br>See paragraphs [0034], [0037], [0040] and [0042], claims 1-2 and table 4. | 1-9 |
| A | WO 2021-144953 A1 (NIPPON STEEL CORPORATION et al.) 22 July 2021 (2021-07-22)<br>See paragraphs [0045]-[0050] and claim 1. | 1-9 |
| A | KR 10-2021-0127736 A (NIPPON STEEL CORPORATION) 22 October 2021 (2021-10-22)<br>See paragraphs [0241]-[0247] and claims 1-2. | 1-9 |
| A | JP 2016-223013 A (JFE STEEL CORP.) 28 December 2016 (2016-12-28)<br>See paragraphs [0054]-[0056] and claim 1. | 1-9 |
| A | KR 10-2014-0106963 A (HYUNDAI STEEL COMPANY) 04 September 2014 (2014-09-04)<br>See claims 1 and 4. | 1-9 |

☐ Further documents are listed in the continuation of Box C.  ☑ See patent family annex.

| | |
|---|---|
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **24 February 2023** | **27 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | | International application No.<br>**PCT/KR2022/019145** | | | |
|---|---|---|---|---|---|---|---|
| Patent document<br>cited in search report | | | Publication date<br>(day/month/year) | Patent family member(s) | | | Publication date<br>(day/month/year) |
| JP | 2012-172258 | A | 10 September 2012 | JP | 5522084 | B2 | 18 June 2014 |
| WO | 2021-144953 | A1 | 22 July 2021 | BR | 112022008897 | A2 | 23 August 2022 |
| | | | | CN | 114846163 | A | 02 August 2022 |
| | | | | EP | 4092149 | A1 | 23 November 2022 |
| | | | | KR | 10-2022-0098786 | A | 12 July 2022 |
| KR | 10-2021-0127736 | A | 22 October 2021 | CN | 113614271 | A | 05 November 2021 |
| | | | | JP | 2021-004407 | A | 14 January 2021 |
| | | | | JP | 2021-059753 | A | 15 April 2021 |
| | | | | JP | 2021-161507 | A | 11 October 2021 |
| | | | | JP | 7207199 | B2 | 18 January 2023 |
| | | | | JP | 7207250 | B2 | 18 January 2023 |
| | | | | WO | 2020-262638 | A1 | 30 December 2020 |
| JP | 2016-223013 | A | 28 December 2016 | JP | 6354789 | B2 | 11 July 2018 |
| KR | 10-2014-0106963 | A | 04 September 2014 | None | | | |

Form PCT/ISA/210 (patent family annex) (July 2022)